# EUROPÄISCHE PATENTSCHRIFT

(11) **EP 0 677 151 B1**
(45) Veröffentlichungstag und Bekanntmachung des Hinweises auf die Patenterteilung: **09.07.1997**
(21) Anmeldenummer: 94901894.9
(22) Anmeldetag: 26.11.1993
(51) Int. Cl.: F16D 7/08

(54) **DREHMOMENTÜBERTRAGUNGSVORRICHTUNG**
TORQUE TRANSMITTING DEVICE
DISPOSITIF DE TRANSMISSION DE COUPLE

(30) Priorität: 28.11.1992 DE 4240086; 02.11.1993 DE 4337284
(43) Veröffentlichungstag der Anmeldung: 18.10.1995
(73) Patentinhaber: VMA Verbindungs-, Mess- und Antriebstechnik GmbH, 63814 Mainaschaff (DE)
(72) Erfinder: HASENSTAB, Werner, D-63814 Mainaschaff (DE)
(74) Vertreter: Köster, Hajo, Dr.
(86) Internationale Anmeldenummer: EP9303328
(87) Internationale Veröffentlichungsnummer: WO9412801

(56) Entgegenhaltungen:
- DE-A- 4 005 678
- DE-A- 4 005 986
- FR-A- 2 344 747
- GB-A- 855 922
- US-A- 3 305 058
- US-A- 3 930 382
- US-A- 4 174 621
- US-A- 5 005 684

## Beschreibung

Die Erfindung betrifft eine Drehmomentübertragungsvorrichtung mit fest einstellbarer Drehmomentbegrenzung, bei der das Drehmoment über ein Kupplungselement und einen Kupplungsgegenkörper auf ein Abtriebselement übertragen wird, der Kupplungsgegenkörper und das Kupplungselement jeweils eine Stirnfläche besitzen, die in Richtung der gemeinsamen Drehachse einander gegenüberliegend angeordnet sind, im Kupplungsgegenkörper oder in dem Kupplungselement in dem Bereich der Stirnfläche mehrere Ausnehmungen vorhanden sind, in denen jeweils ein Wälzkörper gelagert ist, der durch Beaufschlagung mittels einer durch eine Feder in axialer Richtung ausgeübten Kraft in eine Ausnehmung in der gegenüberliegende Stirnfläche hineingedrückt wird, so daß das Kupplungselement und der Kupplungsgegenkörper eine Art Ratschenkupplung bilden und sich bei Überschreiten eines bestimmten Drehmomentes gegeneinander verdrehen, die Feder an einem Widerlager abgestützt ist, das Kupplungselement und die Feder in einem axialen Zwischenraum zwischen dem Kupplungsgegenkörper und dem Widerlager angeordnet sind und der Abstand vom Kupplungsgegenkörper zum Widerlager und somit die axiale Länge dieses Zwischenraumes einstellbar, jedoch im Betriebszustand festgelegt sind.

Bei vielen Werkzeugen, beispielsweise Elektrowerkzeugen, wie Bohrschrauber oder auch pneumatischen sowie hydraulischen Antriebs- oder Montagemaschinen, ist es wünschenswert, das Drehmoment möglichst exakt begrenzen zu können. Auch bei Drehmomentschlüsseln etc. soll das Drehmoment möglichst genau definiert sein. Ferner muß das Drehmoment bei Sicherheitsnaben und Sicherheitskupplungen begrenzt sein, so daß die beim nor-malen Betrieb gegebene drehfeste Verbindung beim Überschreiten eines bestimmten Drehmomentwertes aufgehoben wird. Die erfindungsgemäße Vorrichtung kann bei allen diesen Werkzeugen, Maschinen etc. eingesetzt werden.

Eine Sicherheitsnabe der oben erwähnten Art bzw. eine Überlastkupplung, bei der die kraftübertragenden Elemente formschlüssig mittels vorgespannter Federsysteme im Eingriff stehen und bis zur momentbedingten Trennung im Formschluß gehalten werden, solange ein vorgegebenes Drehmoment nicht überschritten wird, ist beispielsweise aus der CH 370 602 bekannt. Bei dieser bekannten Kupplung weisen das Kupplungselement und der Kupplungsgegenkörper Ausnehmungen zur Aufnahme von Wälzkörpern, beispielsweise Kugeln, auf, die durch Federkraft in die Ausnehmungen im Kupplungselement oder im Kupplungsgegenkörper eingedrückt werden, um eine formschlüssige Verbindung zwischen Antriebs- und Abtriebskörper herzustellen, und die bei Überschreitung eines bestimmten Drehmomentes entgegen der Federkraft ihre Formschlußstellung im Kupplungselement oder im Kupplungsgegenkörper verlassen, so daß letztere sich ratschenartig gegeneinander verdrehen können.

Eine Überlastkupplung der genannten Art, bei der die Federkraft und dadurch bedingt das Drehmoment eingestellt bzw. begrenzt werden können, ist ferner aus der DE 32 08 182 bekannt. Außerdem wird auf die DE 41 01 018.3 verwiesen. Bei der dort beschriebenen Sicherheitsnabe ist das Ausrückmoment fest eingestellt und nachträglich nicht mehr veränderbar.

Allen diesen bekannten Vorrichtungen ist gemeinsam, daß sie kompliziert aufgebaut sind und aus vielen Teilen bestehen. Außerdem ist das Ausrückmoment bei diesen bekannten Vorrichtungen nicht oder nur schwierig exakt einstellbar.

Aus der DE 40 05 678 ist eine Auslösedrehmomenteinstellvorrichtung für eine Überlastkupplung bekannt, welche mit einer Einstellmutter ausgerüstet ist, die gewindemäßig mit einem Gewinde an einem zylindrischen Teil einer Kupplungsnabe im Eingriff steht, wobei die Einstellmutter gegen eine Feder angezogen wird, um eine einem vorbestimmten Auslösedrehmoment entsprechende Druckkraft zu erzeugen. Diese Einstellmutter stellt somit eine Art Widerlager dar, welches jedoch nicht zur Kraftübertragung dient.

Aufgabe der vorliegenden Erfindung ist es daher, eine Drehmomentübertragungsvorrichtung bereitzustellen, die aus wenigen Teilen aufgebaut ist und bei der das Ausrückmoment und somit die Drehmomentbegrenzung leicht und verläßlich einstellbar ist.

Gelöst wird diese Aufgabe durch eine Drehmomentübertragungsvorrichtung der oben genannten Art, die dadurch gekennzeichnet ist, daß das Widerlager das Antriebselement darstellt und mit einem zentrischen Verbindungsteil fest verbunden oder einstückig ausgebildet ist, daß der Abstand zwischen dem Widerlager und dem Kupplungsgegenkörper mit Hilfe des Verbindungsteiles einstellbar ist, und daß das Verbindungsteil mit dem Kupplungsgegenkörper fest verbindbar ist.

Die erfindungsgemäße Vorrichtung besteht im wesentlichen aus einem Widerlager und einem Abtriebselement sowie einem Kupplungselement und einem Kupplungsgegenkörper, wobei das Kupplungselement und der Kupplungsgegenkörper das Drehmoment auf das Abtriebselement übertragen. Dabei ist das Abtriebselement entweder mit dem Kupplungsgegenkörper oder mit dem Kupplungselement drehfest verbunden oder drehfest verbindbar. Das antreibende Drehmoment kann über das Widerlager ausgeübt werden, welches dann mit demjenigen Element oder Körper drehfest verbunden oder verbindbar ist, das bzw. der gegenüber dem mit dem Abtriebselement verbundenen Element bzw. Körper ausrasten bzw verdreht werden kann. Es ist jedoch auch möglich, das Drehmoment direkt auf das nicht mit dem Antriebselement verbundene Teil (Kupplungselement oder Kupplungsgegenkörper) auszuüben.

Das Kupplungselement und der Kupplungsgegenkörper stellen eine Art Ratschenkupplung dar, die beim Überschreiten eines bestimmten Drehmomentes ausrasten und sich gegeneinander verdrehen.

Der Formschluß zwischen Kupplungselement und Kupplungsgegenkörper wird mit Hilfe von federkraftbeaufschlagten Wälzkörpern, bei denen es sich insbesondere um Kugeln handelt, bewerkstelligt.

Das Kupplungselement und der Kupplungsgegenkörper weisen jeweils eine Stirnfläche auf, die einander zugewandt sind und sich somit gegenüberliegen. Das Kupplungselement und der Kupplungsgegenkörper können im Zustand des Formschlusses aneinander anliegen oder auch geringfügig voneinander beabstandet sein.

Die Kugeln sind in einer Ausnehmung entweder im Kupplungsgegenkörper oder im Kupplungselement gelagert und ragen bei Formschluß über die Stirnfläche des sie lagernden Körpers bzw. Elementes in Axialrichtung bzw. in Richtung der gemeinsamen Drehachse hinaus und in eine in der gegenüberliegenden Stirnfläche ausgenommene Ausnehmung hinein. Bei letzterer Ausnehmung kann es sich um ein Sackloch oder um eine Stufenbohrung mit einem kleineren Durchmesser als dem Kugeldurchmesser handeln. Bei der Ausnehmung, in welcher die Kugel gelagert ist, kann es sich ebenfalls um ein Sackloch, das natürlich einen solchen Durchmesser aufweisen muß, daß die Kugel hineinpaßt, oder auch um eine zylindrische Durchgangsbohrung handeln. Die Feder kann dabei ihre Federkraft direkt auf die Kugeln, auf das diese Kugeln lagernde Element bzw. den Körper oder auch auf die Kugeln mittels einer zwischengelegten Scheibe etc. übertragen. Derartige Ausgestaltungen sind beispielsweise aus der bereits genannten CH 370 602 bekannt, worauf hiermit ausdrücklich Bezug genommen wird.

Der Kern der erfindungsgemäßen Drehmomentübertragungsvorrichtung liegt nun unter anderem darin, daß das Kupplungselement und die Feder in einem sich axial und somit in Richtung der gemeinsamen Drehachse erstreckenden Zwischenraum zwischen dem Kupplungsgegenkörper und dem Widerlager (genauer zwischen der zum Kupplungselement zeigenden Stirnfläche des Kupplungsgegenkörpers und dem Anschlag oder der Anschlagfläche, an der die Feder abgestützt ist) angeordnet sind. Dabei ist der Abstand vom Kupplungsgegenkörper zum Widerlager einstellbar. Mit anderen Worten, Kupplungsgegenkörper und Widerlager können axial aufeinander zu bzw. axial voneinander weg bewegt werden, wodurch die axiale Länge des Zwischenraumes verlängert bzw. verkürzt wird.

Je mehr Kupplungsgegenkörper und Widerlager aufeinander zubewegt worden sind, desto kleiner ist natürlich der genannte Zwischenraum. Bedingt dadurch, daß der vom Kupplungselement in Anspruch genommene Raum unveränderbar ist, bewirkt das aufeinander Zubewegen bzw. voneinander Wegbewegen von Kupplungs-gegenkörper/Widerlager, daß lediglich der für die Feder zur Verfügung stehende Raum vergrößert bzw. verkleinert wird. Durch die Einstellung der axialen Länge des der Feder zur Verfügung stehenden Raumes wird auch die Federkraft und damit das Ausrückmoment bzw. die Drehmomentbegrenzung festgelegt.

Beim Kupplungsgegenkörper und beim Kupplungselement handelt es sich vorzugsweise um Ringe, die mit ihren Kreisringstirnflächen einander gegenüberliegen. Widerlager, Kupplungselement, Kupplungsgegenkörper und Abtriebskörper können im wesentlichen in .Axialrichtung nacheinander angeordnet sein.

Die Einstellung des Drehmomentes bei der erfindungsgemäßen Vorrichtung ist somit äußerst einfach, denn es müssen lediglich der Kupplungsgegenkörper oder das Widerlager in Axialrichtung zueinander verschoben werden. Natürlich muß sichergestellt sein, daß der einmal gewählte axiale Abstand im Betriebszustand nicht verändert wird sondern festgelegt ist.

Die erfindungsgemäße Vorrichtung ist somit aus wenigen Teilen aufgebaut und besitzt daher eine geringe Eigenmasse.

Nach einer bevorzugten Ausführungsform ist der Abstand vom Widerlager zum Kupplungsgegenkörper stufenlos einstellbar. Dies geschieht mittels des zentrischen Verbindungsteiles, das mit dem Kupplungsgegenkörper in der gewünschten axialen Stellung drehfest verbindbar ist. Dazu dient vorzugsweise ein mit einem Außengewinde versehener Zylinderbolzen, der in eine zentrale, mit einem korrrespondierenden Gegengewinde ausgestattete Bohrung im Kupplungsgegenkörper eindrehbar ist. Beim Eindrehen und auch beim Ausdrehen des Zylinderbolzens wird die axiale Lage des Widerlagers entsprechend verändert und damit auch - wie oben geschildert - der für die Feder zur Verfügung stehende Raum sowie das Drehmoment.

Der Zylinderbolzen kann im Kupplungsgegenkörper beispielsweise durch einen härtbaren Kleber auf dem Gewinde gesichert werden, der ein unbeabsichtigtes Verdrehen des Zylinderbolzens verhindert. Natürlich ist für diesen Zweck auch ein Sicherungsstift etc. einsetzbar.

Der Zylinderbolzen ist drehfest mit dem Widerlager verbunden oder sogar einstückig damit ausgebildet. Das Widerlager setzt sich somit in Richtung auf das Abtriebselement mittels dieses Zylinderbolzens fort, der durch die Feder und auch durch den Kupplungsgegenkörper hindurchragt. Durch einfaches Drehen des Widerlager wird dessen axiale Bewegung bewirkt. Dient dabei das Widerlager auch als Antriebselement, dann muß natürlich das Abtriebselement drehfest mit dem Kupplungselement verbunden sein.

Die erfindungsgemäße Drehmomentübertragungsvorrichtung kann auch bei einer Sicherheitskupplung für eine Welle-Nabe-Verbindung eingesetzt werden. Entsprechende Ausführungsformen sind weiter unten detaillierter erläutert. Die erfindungsgemäße Vorrichtung kann somit bei allen Anwendungen von Vorteil sein, bei denen ein Ausrasten von zwei formschlüssig miteinander verbundenen Elementen und somit eine Drehmomentbegrenzung gewünscht ist.

Bevorzugte Ausführungsformen sind in den nachfolgenden Figuren näher gezeigt. Von den Figuren zeigen:
- Fig. 1: einen Drehmomentbegrenzer zur drehmomentbegrenzenden Montage von Schrauben und Muttern im Schnitt,
- Fig. 2: eine weitere Ausführungsform des Drehmomentbegrenzers gemäß Fig. 1 im Schnitt,
- Fig. 3: eine weitere Ausführungsform eines Drehmomentbegrenzers gemäß Fig. 1 oder Fig. 2,
- Fig. 4: eine Drehmomentübertragungsvorrichtung in Form einer Sicherheitskupplung teilweise im Schnitt und
- Fig. 5: eine Aufsicht auf die in Fig. 4 gezeigte Sicherheitskupplung von rechts.

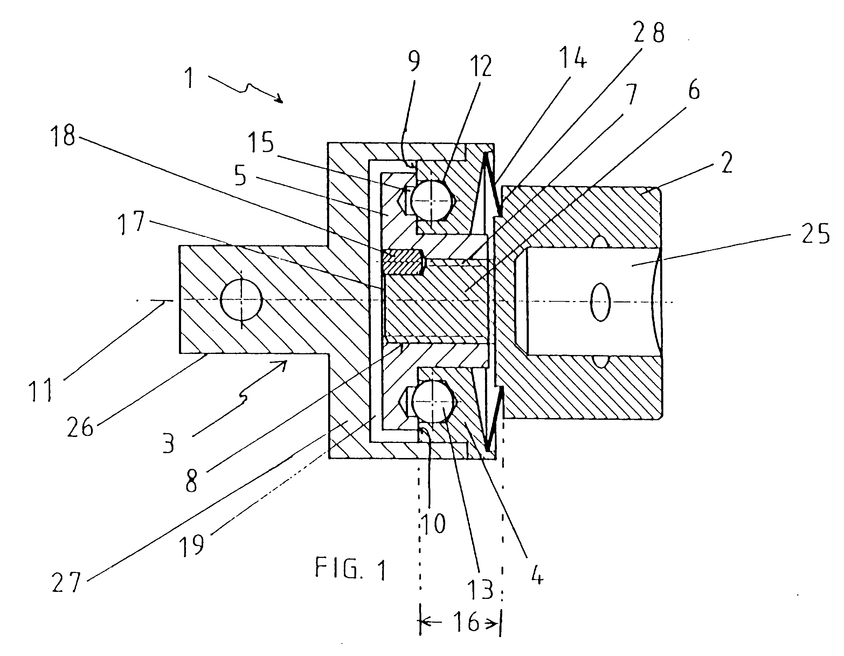

Der in der Fig. 1 gezeigte Drehmomentbegrenzer besitzt ein als Antriebselement dienendes Widerlager 2 und ein Abtriebselement 3. Im Widerlager 2 befindet sich eine Werkzeugaufnahme 25, in die bei der gezeigten Ausführungsform ein Imbusschlüssel gesteckt werden kann. Das Abtriebselement 3 besitzt einen normierten Außenvierkant 26, auf den ein Schraubenschlüssel oder ähnliches aufgesetzt werden kann, und ist mittels eines Flansches 27 klauenartig mit dem Kupplungselement 4 drehfest verbunden, beispielsweise durch Einschrumpfen des Kupplungselementes 4.

Der Kupplungsgegenkörper 5 und das Kupplungselement 4 sind somit, bezogen auf die gemeinsame Drehachse 11, zwischen dem Widerlager 2 und dem Abtriebselement 3 angeordnet.

Das Kupplungselement 4 stellt eine Art Ring bzw. Kreisringscheibe dar, in der mehrere auf einem Kreis angeordnete, in Umfangsrichtung gleichmäßig verteilte Sacklöcher 12 ausgenommen sind, in denen jeweils eine Kugel 13 gelagert ist, die über die zum Abtriebselement 3 zeigende Stirnfläche 9 des Kupplungselementes 4 hinausragen.

Zwischen dem Abtriebselement 3 und dem Kupplungselement 4 ist der Kupplungsgegenkörper 5 angeordnet, der ebenfalls eine Art Ring mit einer zum Kupplungselement 4 hinweisenden Stirnfläche 10 besitzt. Diese Stirnfläche ist kreisringförmig ausgebildet. In ihr sind den Sacklöchern 12 koaxial gegenüberliegend eine der Anzahl der Sacklöcher 12 entsprechende Anzahl von Sackloch- oder Stufenbohrungen 15 angeordnet, die einen geringeren Durchmesser als die Sacklöcher 12 aufweisen und in die die Kugeln 13 unter Herstellung eines Formschlusses hineinragen.

Das Kupplungselement 4 ist von einer Tellerfeder 14 beaufschlagt, die widerlagerseitig an einer exakt planparallelen Anschlagsfläche 28 anliegt bzw. abgestützt ist.

Wird das Drehmoment zu groß, kommen die Kugeln 13 außer Formschluß mit den gegenüberliegenden Sackloch- oder Stufenbohrungen 15 und drücken das Kupplungselement 4 gegen die durch die Tellerfeder 14 ausgeübte Kraft in Richtung auf das widerlager bzw. Antriebselement 2, wobei sich Kupplungselement 4 und Kupplungsgegenkörper 5 zueinander verdrehen.

Dabei muß natürlich sichergestellt sein, daß das mit dem Kupplungselement 4 fest verbundene Abtriebselement 3 in Richtung auf das Widerlager 2 ausreichend bewegt werden kann. Mit anderen Worten, der Abstand 19 muß ausreichend groß sein und zumindest geringfügig größer sein als die Eintauchtiefe der Kugeln 13 in die Sacklochbohrungen 15. Zudem muß sich die Tellerfeder 14 entweder bezüglich des Kupplungselementes 4 oder bezüglich des Widerlager 2 verdrehen können.

Das Widerlager bzw. Antriebselement 2 geht in Richtung auf das Abtriebselement 3 in einen Zylinderbolzen 6 über (es kann sich hier um eine drehfeste Verbindung oder um eine einstückige Ausgestaltung handeln). Der Zylinderstift 6 besitzt ein Außengewinde 7, das in ein Gegengewinde 8 eingedreht ist. Dieses Gegengewinde 8 befindet sich in der Mantelfläche einer zentrischen Bohrung 17 im Kupplungsgegenkörper 5. Der Zylinderbolzen 6 wird in der gewünschten axialen Stellung durch einen Sicherungsstift 18 gesichert.

Die axiale Länge des Zwischenraumes 16 zwischen der Stirnfläche 10 des Kupplungsgegenkörper 5 und der Anschlagfläche 28 für die Tellerfeder 14 kann durch Drehen des Widerlager 2 und damit des Zylinderstiftes 6 verändert werden, so daß diese axiale Länge den gewünschten Betrag hat. Da die axiale Ausdehnung des Kupplungselementes 4 feststeht, wird durch die Veränderung des axialen Zwischenraumes 16 lediglich derjenige Raum verändert, der für die Tellerfeder 14 zur Verfügung steht. Mit anderen Worten, durch Verdrehen des Widerlagers bzw. Antriebselementes 2 wird auch die durch die Tellerfeder 14 ausgeübte Kraft verändert und dann festgelegt. Auf diese Weise ist eine exakte und stufenlose Einstellung der Drehmomentbegrenzung möglich.

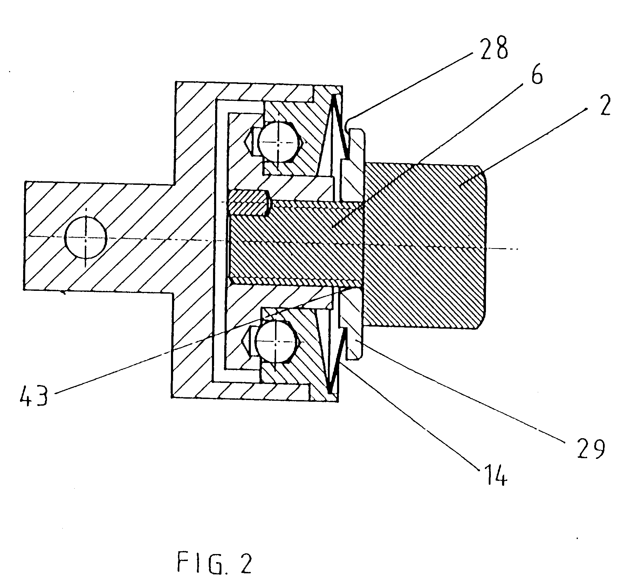

Der in der Fig. 2 gezeigte Drehmomentbegrenzer unterscheidet sich von dem Drehmomentbegrenzer gemäß Fig. 1 im wesentlichen durch eine Druckscheibe 29, die zwischen Widerlager 2 und Tellerfeder 14 eingelegt ist. Dabei ist auch hier darauf zu achten, daß die Anschlagfläche 28 für die Tellerfeder 14 möglichst planparallel ausgerichtet ist. Die Druckscheibe 29 besitzt eine zentrische Bohrung 43, durch die sich der mit dem Widerlager 2 verbundene Zylinderstift 6 erstreckt.

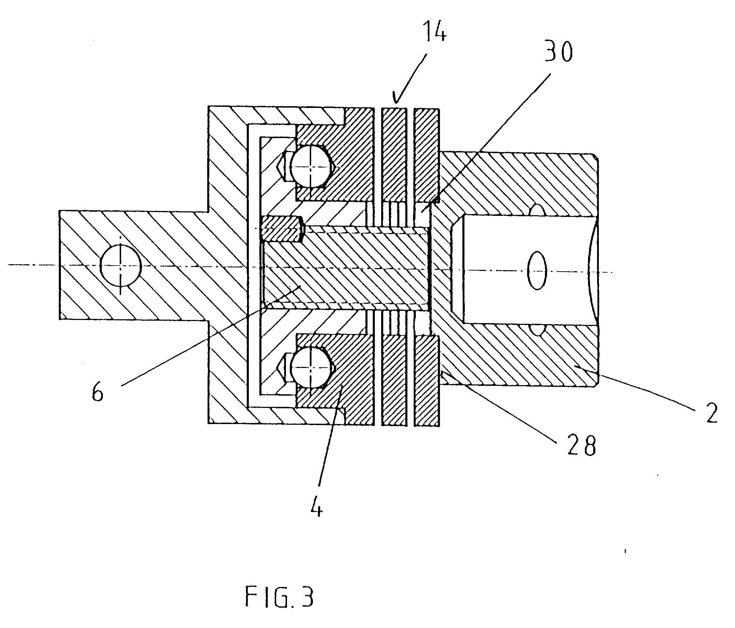

Der in der Fig. 3 gezeigte Drehmomentbegrenzer unterscheidet sich von den oben beschriebenen im wesentlichen dadurch, daß statt einer Tellerfeder eine Federscheibenanordnung 14 vorhanden ist. Diese Federscheibenanordnung 14 besteht aus Federscheiben und die diese Federscheiben miteinander sowie mit Endteilen verbindenden Stegen und besitzt die Eigenschaft einer Feder. Eine derartige Federscheibenanordnung ist in dem europäischen Patent EP 88 116 341.4 beschrieben, auf dessen Offenbarung hiermit ausdrücklich Bezug genommen wird. Diese Federscheibenanordnung 14 ist mit dem Kupplungselement 4 einstückig ausgebildet und besitzt eine Durchgangsbohrung 30 durch die sich der Zylinderbolzen 6 frei hindurch erstreckt.

Die Federscheibenanordnung 14 liegt gegen die Anschlagfläche 28 des Widerlager 2 an und ist diesbezüglich beim Ausrasten verdrehbar.

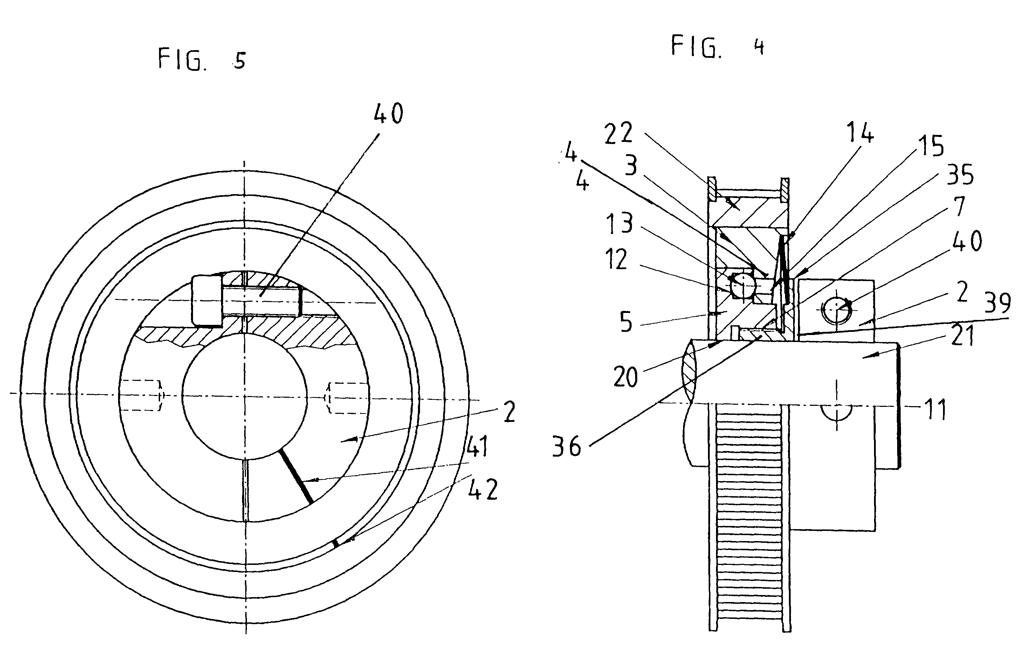

Die in der Fig. 4 gezeigte, erfindungsgemäße Vorrichtung stellt eine Sicherheits- oder Überlastkupplung dar. Das Widerlager 2 dient als Antriebselement und stellt eine Klemmnabe dar, die eine zentrale Bohrung 20 zur Aufnahme einer Welle 21 besitzt. Die Vorrichtung ist mittels der Klemmnabe 2 mittels dieser Welle 21 drehfest verbindbar.

Das Widerlager 2 ist kupplungselementseitig mit einem Anschlagteil 35 ausgestattet, gegen das die Tellerfeder 14 anliegt. Das Anschlagteil 35 geht in einen rohrförmigen Ansatz 36 über, der auf seiner Außenmantelfläche das Außengewinde 7 trägt, mit dem dieser rohrförmige Ansatz 36 in das Gegengewinde im Kupplungsgegenkörper 5 eingedreht ist. Auch der Kupplungskörper 5 und der rohrförmige Ansatz 36 besitzen eine zentrale Bohrung 20 in etwa des gleichen Durchmessers wie das Widerlager 2, so daß sich die Welle 21 durch alle diese Teile bzw. Elemente erstrecken und auch letztere abstützen kann.

Der Kupplungsgegenkörper 5 stellt eine Art Innenring dar, der Ausnehmungen in Form von Sacklöchern 12 besitzt, in denen jeweils eine Kugel 13 gelagert ist. Das Kupplungselement 4 ist mit Durchgangsbohrungen 15 versehen, in die die Kugel 13 hineinragen. Die Ausgestaltung von Kupplungsgegenkörper 5 und Kupplungselement 4 stellt bezüglich der Ausnehmungen und der Kugeln quasi die kinematische Umkehr zu der Ausführungsform gemäß Fig. 1 dar.

Das Kupplungselement 4 stellt einen ringartigen Flansch dar. der radial auch außen in einen das Abtriebselement 3 darstellenden Außenring übergeht, wobei die oben spezifizierten Durchgangsbohrungen in dem radial einwärts gerichteten Flansch angeordnet sind. Dieser Außenring 3 ist wiederum mit einer Abtriebsscheibe 38 verbunden. Natürlich kann die Abtriebsscheibe 38 auch eine Antriebselement darstellen, so daß das Drehmoment von dort auf das als Widerlager/Klemmnabe 2 bezeichnete Teil von dort weiter auf die Welle 21 übertragen wird.

Zwischen dem als Klemmnabe ausgeführten Widerlager 2 und dem Anschlagteil 35 befindet sich eine radiale Einschlitzung 39, so daß die Klemmnabe mittels einer Schraube 40 (siehe auch Fig. 5) festgeklemmt werden kann. Die Ausgestaltung einer derartigen Klemmnabe ist im übrigen bekannt.

Wie man aus der Fig. 4 ersieht, sind der Kupplungsgegenkörper bzw. der Innenring 5 und das Kupplungselement 4 bzw. der Außenring zentral im axialen Bereich der Abtriebsscheibe 22 angeordnet. Die mittlere Radialebene der Abtriebsscheibe 22 und die Radialebene, auf der die Kugeln 13 liegen, fallen in etwa zusammen.

## Patentansprüche

1. Drehmomentübertragungsvorrichtung mit fest einstellbarer Drehmomentbegrenzung, bei der
das Drehmoment über ein Kupplungselement (4) und einen Kupplungsgegenkörper (5) auf ein Abtriebselement (3) übertragen wird,
der Kupplungsgegenkörper (5) und das Kupplungselement (4) jeweils eine Stirnfläche (9 bzw. 10) besitzen, die in Richtung der gemeinsamen Drehachse einander gegenüberliegend angeordnet sind,
im Kupplungsgegenkörper (5) oder in dem Kupplungselement (4) in dem Bereich der Stirnfläche mehrere Ausnehmungen (12) vorhanden sind, in denen jeweils ein Wälzkörper (13) gelagert ist, der durch Beaufschlagung mittels einer durch eine Feder (14) in axialer Richtung ausgeübten Kraft in eine Ausnehmung (15) in der gegenüberliegende Stirnfläche hineingedrückt wird, so daß das Kupplungselement (4) und der Kupplungsgegenkörper (5) eine Art Ratschenkupplung bilden und sich bei Überschreiten eines bestimmten Drehmomentes gegeneinander verdrehen, die Feder (14) an einem Widerlager (2) abgestützt ist, das Kupplungselement (4) und die Feder (14) in einem axialen Zwischenraum (16) zwischen dem Kupplungsgegenkörper (5) und dem Widerlager (2) angeordnet sind und der Abstand vom Kupplungsgegenkörper (5) zum Widerlager (2) und somit die axiale Länge dieses Zwischenraumes (16) einstellbar, jedoch im Betriebszustand festgelegt sind,
dadurch **gekennzeichnet,**
daß das Widerlager (2) das Antriebselement darstellt und mit einem zentrischen Verbindungsteil (6) fest verbunden oder einstückig ausgebildet ist,
daß der Abstand zwischen dem Widerlager (2) und dem Kupplungsgegenkörper (5) mit Hilfe des Verbindungsteiles (6) einstellbar ist und,
daß das Verbindungsteil (6) mit dem Kupplungsgegenkörper (5) fest verbindbar ist.

2. Drehmomentübertragungsvorrichtung nach Anspruch 1,
dadurch **gekennzeichnet,**
daß der Abstand vom Widerlager (2) zum Kupplungsgegenkörper (5) stufenlos einstellbar ist.

3. Drehmomentübertragungsvorrichtung Anspruch 1 oder 2,
dadurch **gekennzeichnet,**
daß das Verbindungsteil (6) ein mit einem Außengewinde (7) versehener und in eine zentrale, mit einem korrespondierende Gegengewinde (8) ausgestattete Bohrung (17) im Kupplungsgegenkörper (5) eindrehbarer Zylinderbolzen (6) ist.

4. Drehmomentübertragungsvorrichtung Anspruch 1 oder 2 in Form einer als Überlastkupplung ausgebildeten Welle-Nabe-Verbindung mit einer zentralen Bohrung (2) zur Aufnahme einer Welle (21),
dadurch **gekennzeichnet,**
daß das als Antriebselement dienende Widerlager (2) auf die Welle (21) aufgesetzt werden kann,
daß der Kupplungsgegenkörper ein Innenring (5) und das Kupplungselement ein in etwa radial davon angeordneter Außenring (3) sind und
daß der Außenring (3) mit einer Scheibe (22) verbunden ist.

5. Drehmomentübertragungsvorrichtung nach einem der vorhergehenden Ansprüche,
dadurch **gekennzeichnet,**
daß die Feder (14) eine Tellerfeder oder eine Federscheibenanordnung ist.

6. Drehmomentübertragungsvorrichtung nach einem der vorhergehenden Ansprüche,
dadurch **gekennzeichnet,**
daß die Ausnehmungen (12;15) im Kupplungselement (4) und im Kupplungsgegenkörper (5) im nicht ausgerasteten Zustand paarweise koaxial zueinander und insbesondere auf einem Kreis sowie gleichmäßig in Umfangsrichtung verteilt angeordnet sind.

## Claims

1. Torque transfer device with fixedly adjustable torque restriction wherein the torque is transferred through a coupling element (4) and a coupling counter body (5) to an output element (3),
the coupling counter body (5) and coupling element (4) each have an end face (9,10) which are mounted opposite one another in the direction of the common rotary axis,
several recesses (12) are provided in the coupling counter body (5) or in the coupling element (4) in the area of the end face wherein a rolling body (13) is mounted in each of the recesses and is pressed when biased by means of a force exerted in the axial direction by a spring (14) into a recess (15) in the opposite end face so that the coupling element (4) and coupling counter body (5) form a type of ratchet coupling and turn relative to each other when a certain torque is exceeded,
the spring (14) is supported on an abutment (2),
the coupling element (4) and the spring (14) are mounted in an axial interspace (16) between the coupling counter body (5) and the abutment (2) and
the distance of the coupling counter body (5) from the abutment (2) and thus the axial length of this interspace (16) are adjustable but fixed in the operating state,
characterised in that the abutment (2) represents the drive element and is fixedly connected to a central connecting part (6) or is integral with same,
that the distance between the abutment (2) and the coupling counter body (5) is adjustable by means of the connecting part (6) and
that the connecting part (6) is fixedly connectable with the coupling counter body (5).

2. Torque transfer device according to claim 1 characterised in that the distance of the abutment (2) from the coupling counter body (5) is infinitely adjustable.

3. Torque transfer device according to claim 1 or 2 characterised in that the connecting part (6) is a cylinder bolt (6) provided with an outer thread and adapted to turn into a central bore (17) in the coupling counter body (5) fitted with a corresponding counter thread (8).

4. Torque transfer device according to claim 1 or 2 in the form of a shaft-hub connection formed as an overload coupling with a central bore (2) for holding a shaft (21), characterised in that the abutment (2) serving as drive element can be set on the shaft (21), that the coupling counter body is an inner ring (5) and the coupling element is an outer ring (3) set radially therefrom and that the outer ring (3) is connected to a disc (22).

5. Torque transfer device according to one of the preceding claims, characterised in that the spring (14) is a plate spring or a spring disc assembly.

6. Torque transfer device according to one of the preceding claims, characterised in that the recesses (12;15) in the coupling element (4) and in the coupling counter body (5) are arranged in the non-engaged state in pairs coaxial with each other and spread out evenly in the circumferential direction on a circle.

## Revendications

1. Dispositif de transmission de couple avec limitation, réglable de façon fixe, du couple, dans lequel le couple est transmis par l'intermédiaire d'un élément d'accouplement (4) et d'un corps antagoniste d'accouplement (5) à un élément mené (3),
le corps antagoniste d'accouplement (5) et l'élément d'accouplement (4) possèdent des surfaces frontales respectives (9 et 10), qui sont disposées réciproquement en vis-à-vis dans la direction de l'axe de rotation commun,
dans le corps antagoniste d'accouplement (5) ou dans l'élément d'accouplement (4) sont présents, dans la zone de la surface frontale, plusieurs évidements (12), dans chacun desquels est disposé respectivement un corps roulant (13), qui est repoussé dans un évidement (15) situé dans la surface frontale opposée, sous l'effet d'une charge produite par une force appliquée par un ressort (14) dans la direction axiale, de sorte que l'élément d'accouplement (4) et le corps antagoniste d'accouplement (5) forment une sorte d'accouplement à cliquet et tournent l'un par rapport à l'autre lors du dépassement d'un couple déterminé, le ressort (14) prend appui sur une butée (2), l'élément d'accouplement (4) et le ressort (14) sont disposés dans un espace axial intercalaire (16) entre le corps antagoniste d'accouplement (5) et la butée (2) et la distance entre le corps antagoniste d'accouplement (5) et la butée (2) et par conséquent la longueur axiale de cet espace intercalaire (16) sont réglables, mais sont fixées dans l'état de fonctionnement, caractérisé en ce
que la butée (2) représente l'élément d'entraînement et est reliée de façon fixe ou est agencée d'un seul tenant avec un élément centré de liaison (6),
que la distance entre la butée (2) et le corps antagoniste d'accouplement (5) est réglable à l'aide de l'élément de liaison (6), et
que l'élément de liaison (6) peut être relié de façon fixe au corps antagoniste d'accouplement (5).

2. Dispositif de transmission de couple selon la revendication 1, caractérisé en ce que la distance entre la butée (2) et le corps antagoniste d'accouplement (5) est réglable progressivement.

3. Dispositif de transmission de couple selon la revendication 1 ou 2, caractérisé en ce que l'élément de liaison (6) est un goujon cylindrique qui est pourvu d'un filetage extérieur (7) et peut être vissé dans un perçage central (17) pourvu d'un filetage antagoniste correspondant (8) et aménagé dans le corps antagoniste d'accouplement (5).

4. Dispositif de transmission de couple selon la revendication 1 ou 2, sous la forme d'une liaison arbre-moyeu agencée sous la forme d'un accouplement de sécurité, comportant un perçage central (2) servant à loger un arbre (21),
caractérisé en ce
que la butée (2) utilisée comme élément d'entraînement peut être montée sur l'arbre (21),
que le corps antagoniste d'accouplement est une bague intérieure (5) et l'élément d'accouplement est une bague extérieure (3) disposée par exemple radialement par rapport à la bague intérieure, et
que la bague extérieure (3) est reliée à un disque (22).

5. Dispositif de transmission de couple selon l'une des revendications précédentes, caractérisé en ce que le ressort (14) est un ressort Belleville ou un dispositif à rondelle élastique.

6. Dispositif de transmission de couple selon l'une des revendications précédentes, caractérisé en ce qu'à l'état non désencliqueté, les évidements (12;15) situés dans l'élément d'accouplement (4) et dans le corps antagoniste d'accouplement (5) sont disposés réciproquement coaxialement par couples et notamment sur un cercle et en étant répartis uniformément dans la direction circonférentielle.
